# FASCICULE DE BREVET EUROPEEN

(11) **EP 0 405 684 B1**
(45) Date de publication et mention de la délivrance du brevet: **13.09.1995**
(21) Numéro de dépôt: 90201678.1
(22) Date de dépôt: 21.06.1990
(51) Int. Cl.: F16K 17/02

(54) **Dispositif de protection contre une surpression**
Sicherheitsvorrichtung gegen einen Überdruck
Protection device against overpressure

(30) Priorité: 27.06.1989 FR 8908520
(43) Date de publication de la demande: 02.01.1991
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Frijlink, Peter, F-75007 Paris (FR)
(74) Mandataire: Caron, Jean

(56) Documents cités:
- EP-A- 0 027 227
- FR-A- 1 505 971

## Description

La présente invention concerne un dispositif pour la protection d'un appareil contre une surpression, muni d'un clapet appliqué au moyen d'une force pneumatique sur un orifice communiquant avec l'espace interne de l'appareil, le clapet étant situé de l'autre coté de l'orifice par rapport au dit espace.

Un tel dispositif est utilisé en général pour des réservoirs de gaz sous pression qu'une pression excessive risquerait de détruire.

Un tel dispositif de protection contre une surpression à commande pneumatique du clapet est connu de EP-A-0 027 227. Le dispositif décrit dans ce document comprend une enceinte souple qui est gonflée à une pression convenable et qui appuie sur le clapet.

L'invention se propose de simplifier considérablement la réalisation d'un tel dispositif, et aussi d'améliorer ses performances, pour l'utiliser dans un appareil destiné à la réalisation de dépots chimiques en phase vapeur, par exemple un réacteur d'épitaxie. Dans ce cas, l'enceinte de l'apareil n'est pas normalement soumise à de hautes pressions, mais il se pose des problèmes particuliers. Des gaz très toxiques y sont utilisés, ce qui entraine la nécessité de prévoir des dispositifs de lavage et d'épuration en sortie, et des dépots solides s'y produisent. Ces dépots sont susceptibles de boucher les orifices de sortie de gaz et d'entraîner par conséquent une surpression dans le réacteur: de telles surpressions doivent être évitées absolument, même si elles sont très faibles (la limite à ne pas dépasser est d'environ 0,1 bar) et même si elles sont de courte durée. Comme le débit de gaz dans le réacteur est d'environ 60 à 80 litres/minute, et que le volume intérieur du réacteur est d'environ un litre, une surpression de 0,1 bar peut être atteinte en un dixième de seconde si la sortie de gaz se bouche.

Un dispositif de protection pour un tel appareil doit donc posséder les qualités suivantes:
- il agit de façon fiable et reproductible même pour des surpressions faibles.
- son action est très rapide.
- sa pression de déclenchement est réglable.
- le fait que le dispositif a agi peut être détecté facilement.
- son étanchéité est parfaite et contrôlable.

Toutes ces qualités sont obtenues avec l' invention, du fait que, pour créer la force pneumatique, le dispositif est muni d'un deuxième orifice situé du même côté du clapet que le premier orifice, et sur lequel sur lequel est aussi appliqué le clapet, que des moyens d'étanchéité empêchent le premier et le deuxième orifice de communiquer entre eux lorsque le clapet leur est appliqué, et que le deuxième orifice est relié à une enceinte à pression déterminée, cependant que l'autre côté du clapet est soumis à une pression supérieure à celle de la dite enceinte à pression déterminée.

Lorsque le clapet commence à s'écarter de son siège, il s'écarte aussi du deuxième orifice, et la force pneumatique cesse d'agir : on obtient donc avec une extrème simplicité un désaccouplement immédiat du clapet.

Dans un mode de réalisation avantageux, les moyens d'étanchéité sont constitués par deux joints dont l'un des deux joints entoure complètement l'autre, et le deuxième orifice débouche entre les deux joints.

La surpression de déclenchement que l'on peut obtenir est convenable pour un réacteur d'épitaxie lorsque la pression de l'enceinte à pression déterminée est ajustable entre zéro et la pression atmosphérique, cependant que l'autre côté du clapet est soumis à la pression atmosphérique.

Ainsi la surpression de déclenchement est elle même ajustable.

Pour empêcher les gaz contenus dans l'enceinte, dans le cas d'un réacteur d'épitaxie, de pénétrer dans le dispositif et d'y déposer des salissures, une source de gaz débouche avantageusement dans celui des espaces, délimité par des moyens d'étanchéité lorsque le clapet est appliqué, dans lequel débouche le premier orifice.

La détection du fait que le dispositif agit est extrêmement facile, avec un tel dispositif, puisqu'il suffit qu'un détecteur de pression soit connecté à l'espace dans lequel débouche le deuxième orifice : lorsque le dispositif agit, la pression remonte dans cet espace.

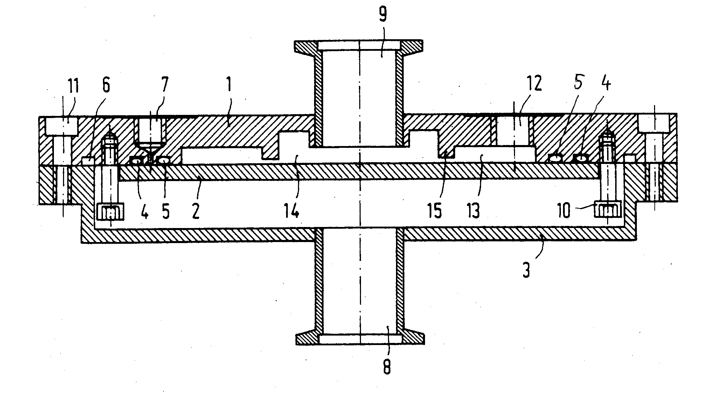

La description qui va suivre, en regard de la figure unique décrivant un exemple non limitatif de réalisation de l'invention fera bien comprendre cette dernière.

La figure unique est une coupe médiane dans un dispositif selon l'invention, réalisé sous une forme cylindrique.

Le clapet pourrait être appliqué directement sur la paroi externe d'un appareil à protéger. Néanmoins pour obtenir une meilleure commodité d'emploi, on a préféré réaliser un dispositif distinct.

Ce dispositif comporte un corps cylindrique fait d'une embase 1 et d'un couvercle 3. Au centre de l'embase est soudé un tube 9 destiné à être relié à l'espace à protéger; dans le cas présent il est relié à la tubulure de sortie des gaz d'un réacteur d'épitaxie. Au centre du couvercle 3 est soudé un tube 8 communiquant avec l'espace libre extérieur. Le couvercle est fixé à l'embase au moyens de boutons 11.

Le dispositif est utilisé de préférence dans la position représentée, c'est à dire avec le tube 9 tourné vers le haut.

Le tube 9 débouche dans un volume 14 constitué par une cavité circulaire creusée dans la face inférieure de l'embase (la face interne du dispositif), entourée par une autre cavité 13 annulaire, également creusée dans l'embase. Le clapet 2, constitué d'une plaque plane circulaire, est appliqué sur ces deux cavités à la fois. La nervure 15 située entre les deux cavités ne touche pas le clapet, de façon à laisser un passage étroit entre les cavités, lorsque le clapet est apliqué. L'ensemble des deux cavités 13,14 en communication avec l'espace à protéger constitue ce qu'on a appelé jusqu'ici "l'orifice communiquant avec l'espace interne de l'appareil".

Sur la face inférieure de l'embase, et à l'extérieur des deux cavités 13,14 sont réalisées deux gorges concentriques recevant chacune un moyen d'étanchéité, à savoir un joint torique respestivement 4,5. En étant appliqué sur ces joints, le clapet délimite deux espaces concentriques: les moyens d'étanchéité empêchent les deux orifices de communiquer entre eux lorsque le clapet est appliqué. L'espace intérieur délimité par le joint 5 comprend l'orifice communiquant avec l'espace interne de l'appareil, cependant qu'entre les deux joints 4,5, le clapet est appliqué sur un deuxième orifice 7 muni d'un filetage pour y raccorder un tuyau communicant avec une enceinte à pression déterminée. Cette enceinte (non représentée) est un réservoir de vide dont la pression est réglable entre la pression atmosphérique et un vide primaire. De ce fait la dépression entre les deux joints 4,5 applique le clapet contre son siège, cependant qu'une surpression dans le tube 9 et les volumes 13,14 tend à l'en écarter. L'aire comprise entre les deux joints 4,5 est à peu près égale au dixième de celle entourée par le joint interne 5 et la dépression dans le réservoir de vide est habituellement fixée à la moitié de la pression atmosphérique: ainsi les forces exercées par la pression et la dépression sur chacune des aires sont à peu près égales entre elles lorsque la surpression dans le tube 9 est égale à 0,05 bar. Alors le clapet se détache de l'embase 1, et tombe sous l'effet de son propre poids; il est retenu par des têtes de boulons 10, de façon à laisser un passage libre entre le clapet et le couvercle 3, pour l'évacuation du gaz en surpression par le tube 8.

Le rôle de la subdivision de l'orifice communiquant avec le réacteur en deux cavités 13,14 est le suivant: dans la cavité extérieure 13 débouche un orifice 12 muni d'un filetage pour y raccorder un tuyau relié à une source de gaz. Par cet orifice est amené un très faible débit d'un gaz dit de balayage, par exemple de l'azote, qui passe entre la nervure 15 et le clapet 2 pour aller ensuite vers le réacteur par le tube 9, de façon à empêcher les gaz contenus dans l'enceinte du réacteur de pénétrer dans le dispositif et d'y déposer des salissures.

Afin d'attirer l'attention d'un opérateur conduisant le réacteur si une surpression s'est produite, un capteur de pression est connecté à l'espace qui, lorsque le clapet est appliqué, est délimité entre les deux joints d'étanchéité 4 et 5, espace dans lequel débouche le deuxième orifice 7. Le capteur est relié à cet espace, par exemple via un autre orifice (non représenté) identique à l'orifice 7 et situé ailleurs dans l'anneau délimité entre les joints 4, 5. Lorsque le clapet descend, cet espace est ouvert sur l'extérieur, et la dépression ne peut y persister. Ce capteur actionne une alarme.

On remarquera que l'étanchéité du dispositif est assurée du fait que s'il y avait une fuite via le joint 5, le gaz fuirait vers le réservoir de vide, et non vers l'extérieur. En outre, le vide dans ce réservoir est de préférence statique, c'est à dire qu'après un pompage initial, on déconnecte la pompe et le vide se maintient du fait que l'espace compris entre les joints 4 et 5 est clos. Dès lors, s'il y avait une fuite via le joint 5, cela détruirait le vide et le système se déclencherait, en donnant par conséquent l'alarme.

## Revendications

1. Dispositif de protection d'un appareil contre une surpression, muni d'un clapet (2) appliqué au moyen d'une force pneumatique sur un orifice (13,14) communiquant avec l'espace interne (9) de l'appareil, le clapet étant situé de l'autre coté de l'orifice par rapport audit espace, caractérisé en ce que, pour créer la force pneumatique, le dispositif est muni d'un deuxième orifice (7) situé du même côté du clapet que le premier orifice, et sur lequel est aussi appliqué le clapet, que des moyens d'étanchéité (5) empêchent les deux orifices de communiquer entre eux lorsque le clapet est appliqué, et que le deuxième orifice est relié à une enceinte à pression déterminée, cependant que l'autre côté du clapet est soumis à une pression supérieure à celle de la dite enceinte à pression déterminée.

2. Dispositif selon la revendication 1, caractérisé en ce que les moyens d'étanchéité sont constitués par deux joints (4,5) dont l'un (4) des deux joints entoure complètement l'autre (5), et en ce que le deuxième orifice (7) débouche entre les deux joints.

3. Dispositif selon l'une des revendications 1 ou 2, caractérisé en ce que la pression de la susdite enceinte à pression déterminée reliée au deuxième orifice (7) est ajustable entre zéro et la pression atmosphérique, cependant que le dit autre côté du clapet est soumis sensiblement à la pression atmosphérique.

4. Dispositif selon l'une quelconque des revendications précédentes, caractérisé en ce qu'une source de gaz (12) débouche dans celui (13) des espaces, délimité par des moyens d'étanchéité lorsque le clapet est appliqué, qui communique avec l'espace interne (9) de l'appareil.

5. Dispositif selon l'une quelconque des revendications précédentes, caractérisé en ce qu'un capteur de pression est connecté à celui des espaces, délimité par des moyens d'étanchéité lorsque le clapet est appliqué, dans lequel débouche le deuxième orifice (7).

## Claims

1. A device for protection of an apparatus against an overpressure provided with a valve (2) applied by means of a pneumatic force to an orifice (13, 14) communicating with the internal space (9) of the apparatus, the valve being situated on the other side of the orifice with respect to said space, characterized in that, for creating said pneumatic force, the device comprises a second orifice (7), which is situated at the same side of the valve as the first orifice and to which the valve is also applied, in that sealing means (5) prevent the two orifices from communicating with each other when the valve is applied, and in that the second orifice is connected to a closed space having a given pressure, while the other side of the valve is subjected to a pressure higher than that in said closed space having a given pressure.

2. A device as claimed in Claim 1, characterized in that the sealing means are constituted by two seals (4, 5), one (4) of which entirely surrounds the other (5), and in that the second orifice (7) issues between the two seals.

3. A device as claimed in any one of Claims 1 and 2, characterized in that the pressure of said closed space having a given pressure is adjustable between zero and atmospheric pressure, while the other side of the valve is subjected substantially to atmospheric pressure.

4. A device as claimed in any one of the preceding Claims, characterized in that a gas source (12) issues into that one (13) of the spaces delimited by the sealing means when the valve is applied which is in communication with the internal space (9) of the apparatus.

5. A device as claimed in any one of the preceding Claims, characterized in that a pressure sensor is connected that one of the spaces delimited by the sealing means when the valve is applied into which the second orifice (7) issues.

## Patentansprüche

1. Vorrichtung mm Schutz eines Geräts gegen einen Überdruck mit einer durch eine pneumatische Kraft an eine mit dem Innenraum (9) des Geräts kommunizierende Öffnung (13, 14) angedrückten Ventilscheibe (2), wobei die Ventilscheibe an der diesem Raum gegenüberliegenden Seite der Öffnung angeordnet ist, dadurch gekennzeichnet, daß die Vorrichtung zur Erzeugung der pneumatischen Kraft mit einer an der selben Seite der Ventilscheibe wie die erste Öffnung angeordneten zweiten Öffnung (7) versehen ist, an die die Ventilscheibe gleichfalls angelegt wird, daß bei angelegter Ventilscheibe Dichtmittel (5) die Kommunikation zwischen den beiden Öffnungen verhindern und daß die zweite Öffnung mit einem Druckgefäß mit einem bestimmten Druck verbunden ist, während auf die andere Seite der Ventilscheibe ein höherer Druck als der Druck in diesem Druckgefäß mit bestimmtem Druck einwirkt.

2. Vorrichtung nach Anspruch 1, dadurch gekennzeichnet, daß die Dicht-mittel aus zwei Dichtringen (4, 5) bestehen, wovon einer (4) den anderen (5) völlig umschließt, und daß die zweite Öffnung (7) in den Raum zwischen den beiden Dichtringen mündet.

3. Vorrichtung nach Anspruch 1 oder 2, dadurch gekennzeichnet, daß der Druck in diesem mit der zweiten Öffnung (7) verbundenen Druckgefäß mit bestimmtem Druck zwischen Null und dem Außenluftdruck einstellbar ist, während die Ventilscheibe an der anderen Seite im wesentlichen unter Außenluftdruck steht.

4. Vorrichtung nach einem der vorhergehenden Ansprüche, dadurch gekennzeichnet, daß eine Gasquelle (12) in den bei angelegter Ventilscheibe von den Dichtmitteln abgeschlossenen und mit dem Innenraum (9) des Geräts kommunizierenden Raum (13) mündet.

5. Vorrichtung nach einem der vorhergehenden Ansprüche, dadurch gekennzeichnet, daß ein Druckaufnehmer mit dem bei angelegter Ventilscheibe von den Dichtmittein abgeschlossenen Raum, in den die zweite Öffnung (7) mündet, verbunden ist.
